# EUROPÄISCHE PATENTSCHRIFT

(11) **EP 2 342 775 B1**
(45) Veröffentlichungstag und Bekanntmachung des Hinweises auf die Patenterteilung: **28.10.2015**
(21) Anmeldenummer: 09748039.6
(22) Anmeldetag: 28.10.2009
(51) Int. Cl.: H01M 4/16, H01M 4/73, B21H 8/00, H01M 4/68, H01M 10/04, H01M 10/06

(54) **GEWALZTE ELEKTRODE FÜR EINEN AKKUMULATOR**
ROLLED ELECTRODE FOR A STORAGE BATTERY
ÉLECTRODE LAMINÉE POUR UN ACCUMULATEUR

(30) Priorität: 04.11.2008 DE 102008055775
(43) Veröffentlichungstag der Anmeldung: 13.07.2011
(73) Patentinhaber: Johnson Controls Autobatterie GmbH & Co. KGaA, 30419 Hannover (DE)
(72) Erfinder: STREUER, Peter, 30559 Hannover (DE)
(74) Vertreter: Meissner, Bolte & Partner GbR
(86) Internationale Anmeldenummer: PCT/EP2009/007714
(87) Internationale Veröffentlichungsnummer: WO 2010/051931

(56) Entgegenhaltungen:
- EP-A- 0 622 161
- EP-A- 1 317 007
- DE-A1- 2 461 199
- JP-A- 58 201 251

## Beschreibung

Die Erfindung betrifft eine gewalzte Elektrode für einen Akkumulator. Ferner betrifft die Erfindung ein Verfahren zur Herstellung einer solchen Elektrode.

Eine gattungsgemäße Elektrode ist beispielsweise aus der WO 01/04977 A1 bekannt.

Die Druckschrift EP 0 622 161 A1 betrifft ein Verfahren zum Herstellen einer Elektrode für einen Akkumulator. Hierbei ist vorgesehen, plattenförmiges Elektrodenmaterial durch einen Rollkörper zu führen, welcher Ausstandsdorne aufweist. Durch diese Ausstanzdorne wird dem Elektrodengitter die gewünschte Form gegeben.

Die Druckschrift EP 1 317 007 A1 betrifft ein weiteres Verfahren zum Herstellen einer Elektrode für einen Akkumulator. Hierbei ist vorgesehen, ein Ausgangsmaterial derart zu walzen, das längs verlaufende Erhebungen in das Ausgangsmaterial eingebracht werden.

Die Druckschrift DE 24 61 199 A1 betrifft ein Verfahren zur Herstellung von Gitterplatten für Bleiakkumulatoren, wobei die Dicke der Gitterstäbe geringer ist als die des Gitterrahmens. Hierfür wird ein Formmodifizierungsverfahren in Form eines Pressvorgangs vorgeschlagen.

Die Druckschrift JP 58201251 betrifft ein Verfahren zur Herstellung von Elektroden, bei denen ein pastöses aktives Material zunächst über einen Trichter in das Gitter der Elektrode geführt wird und über Walzen in das Gitter eingepresst und verfestigt wird.

Die bekannten Elektroden werden üblicherweise aus strangförmigem Elektrodenmaterial, üblicherweise Blei, auf Walzmaschinen in eine gewünschte Form gewalzt. Hierbei werden beispielsweise durch Ausstanzen entsprechende Aussparungen in der Elektrode vorgesehen, durch die eine gitterförmige Innenstruktur der Elektrode entsteht.

Derartige Elektroden werden beispielsweise in Blei-Säure-Akkumulatoren für Fahrzeuge eingesetzt, z. B. als Starterbatterie. Im Rahmen allgemeiner Effizienzund Kostenverbesserungen an solchen Akkumulatoren ist es erwünscht, auch die elektrischen und mechanischen Eigenschaften der Elektroden zu verbessern.

Der Erfindung liegt daher die Aufgabe zu Grunde, eine Elektrode mit verbesserten elektrischen und mechanischen Eigenschaften sowie Möglichkeiten zu deren Herstellung anzugeben. Insbesondere soll in einer einfachen Weise die Robustheit der Elektrode optimiert werden.

Diese Aufgabe wird durch die in dem Patentanspruch 1 angegebene erfindungsgemäße Elektrode gelöst. Ein vorteilhaftes Herstellungsverfahren für die erfindungsgemäße Elektrode ist in dem Anspruch 8 angegeben. Vorteilhafte Weiterbildungen gehen aus den Unteransprüchen hervor.

Die erfindungsgemäße gewalzte Elektrode hat den Vorteil, mittels einer Vergrößerung der Dicke in bestimmten Bereichen der Elektrode eine erhöhte mechanische Festigkeit zu bieten, was einerseits für die Herstellung eines Akkumulators von Vorteil ist, andererseits auch beim späteren Betrieb des Akkumulators zu einer besseren Haltbarkeit und Langlebigkeit führt. Bei der Herstellung des Akkumulators ist die erhöhte mechanische Stabilität von Vorteil beim Einsetzen der Elektroden in ein Batteriegehäuse, was auf Grund der erhöhten Robustheit der erfindungsgemäßen Elektrode schneller und mit erhöhter mechanischer Kraft erfolgen kann. Hierdurch können die Fertigungszeiten für einen Akkumulator und somit dessen Herstellkosten gesenkt werden, Zudem kann der Fertigungsausschuss verringert werden.

Bei gewalzten Elektroden war nach bisherigem Stand der Technik vorgesehen, die Elektroden aus einheitlich dickem Material zu fertigen, was insbesondere durch den Walzprozess bedingt ist. Die erfindungsgemäße Elektrode ist jedoch als gewalzte Elektrode ausgebildet mit bestimmten Bereichen, die eine größere Dicke aufweisen als das darin angeordnete Gitter. Ein Herstellungsverfahren für eine solche gewalzte Elektrode ist in dem Anspruch 8 angegeben.

Ein weiterer Vorteil der erfindungsgemäßen Elektrode besteht darin, dass hinsichtlich der nicht mit der erhöhten Dicke ausgebildeten Bereiche der Elektrode auf eine verringerte Materialstärke übergegangen werden kann. Dies führt zu einer Einsparung an Material, was sowohl aus ökologischen als auch aus ökonomischen Gründen wünschenswert ist. Elektroden mit geringerer Materialstärke im Bereich des Gitters bewirken zudem einen verbesserten elektrischen Wirkungsgrad des Akkumulators.

Die Erfindung wird nachfolgend anhand von Ausführungsbeispielen unter Verwendung von Zeichnungen näher erläutert. Es zeigen
- Figur 1: eine gewalzte Elektrode in Draufsicht und
- Figur 2: eine gewalzte Elektrode in Seitenansicht und
- Figur 3: strangförmiges Elektrodenmaterial während des Herstellprozesses in Draufsicht und
- Figur 4: das Elektrodenmaterial gemäß Figur 3 sowie Teile einer Maschine in Seitenansicht und
- Figur 5: eine alternative Ausführungsform von Walzen und
- Figur 6: eine mit der Ausführungsform der Walzen gemäß Figur 5 hergestellte Elektrode in Seitenansicht.

In den Figuren werden für einander entsprechende Elemente gleiche Bezugszeichen verwendet.

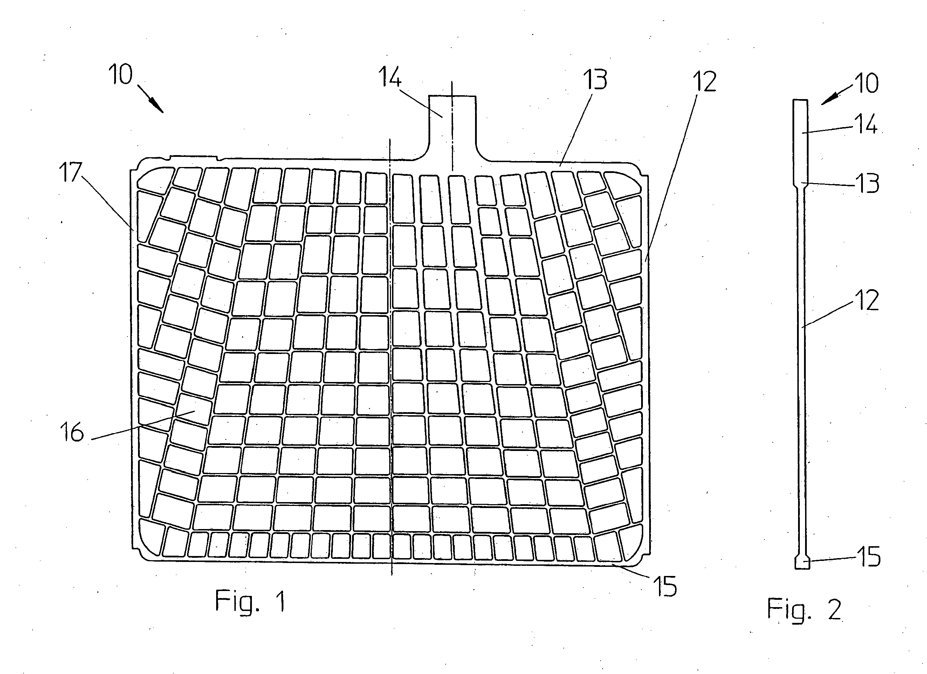

Figur 1 zeigt eine Elektrode 10, die beispielsweise aus Blei hergestellt ist. Die Elektrode 10 weist einen aus vier Abschnitten gebildeten Rahmen 12, 13, 15, 17 auf. Ausgehend von der Darstellung in Figur 1 bildet der Abschnitt 12 einen rechten Rahmenbereich, der Abschnitt 13 einen oberen Rahmenbereich, der Abschnitt 15 einen unteren Rahmenbereich und der Abschnitt 17 einen linken Rahmenbereich. Innerhalb des Rahmens 12, 13, 15, 17 ist das Elektrodenmaterial als Gitter 16 ausgebildet. Das Gitter 16 kann beispielsweise durch Ausstanzen von Ausschnitten aus zunächst gegossenem und dann flachgewalztem Elektrodenmaterial (Blei) hergestellt werden. Wie erkennbar ist, sind die Rahmenabschnitte jeweils paarweise im Wesentlichen parallel zueinander angeordnet und bilden jeweils einander gegenüberliegende Begrenzungen des dazwischen angeordneten Gitters 16, d. h. der linke Rahmenabschnitt 17 ist parallel zu dem rechten Rahmenabschnitt 12, und der obere Rahmenabschnitt 13 ist parallel zu dem unteren Rahmenabschnitt 15. Hierdurch wird eine im Wesentlichen rechteckförmige Ausbildung der Elektrode erreicht.

Die Elektrode 10 ist am oberen Rahmenabschnitt 13 mit einer daran angeformten Kontaktfahne 14 versehen. Die Kontaktfahne dient zur elektrischen Ankopplung der Elektrode 10 an einem Pol des Akkumulators. Hierbei werden üblicherweise parallel in dem Akkumulator angeordnete Sätze von Elektroden über ihre jeweiligen Kontaktfahnen 14 miteinander verbunden und zusätzlich mit einem Akkumulatorpol verbunden.

Die Figur 2 zeigt die Elektrode 10 gemäß Figur 1 in Seitenansicht. Wie erkennbar ist, weist die Elektrode 10 im Bereich der Kontaktfahne 14, des oberen Rahmenabschnitts 13 und des unteren Rahmenabschnitts 15 eine größere Dicke auf als in dem mittleren Bereich, der in Figur 2 durch den dabei sichtbaren Rahmenabschnitt 12 dargestellt wird. Es ist vorteilhaft, die Dicke des Gitters 16 identisch mit der Dicke der Rahmenabschnitte 12, 17 auszubilden.

Es ist ebenfalls vorteilhaft, nur einen oder einzelne Abschnitte 13, 15 des Rahmens 12, 13, 15, 17 oder eines der Paare der sich gegenüberliegenden Abschnitte 13, 15 des Rahmens 12, 13, 15, 17 mit einer größeren Dicke als das Gitter 16 auszubilden. Ebenso ist es vorteilhaft, z.B. nur die Kontaktfahne 14 mit einer größeren Dicke als das Gitter 16 auszubilden.

In der Figur 2 sind die Rahmenabschnitte 13, 15 und die Kontaktfahne 14 mit gleicher Dicke dargestellt. Je nach Anwendungsfall kann es auch vorteilhaft sein, beispielsweise nur die Kontaktfahne 14 oder die Kontaktfahne 14 sowie den oberen Rahmenabschnitt 13 mit erhöhter Dicke auszubilden und den unteren Rahmenabschnitt 15 mit geringerer Dicke. Beispielsweise ist es vorteilhaft, den Rahmenabschnitt 15 gleich dick wie das Gitter 16 auszubilden. Hierdurch kann die Elektrode leicht in relativ schmale Aufnahmeräume des Akkumulators eingeführt werden.

Gemäß Figur 2 ist außerdem dargestellt, dass die Bereiche 13, 14, 15 der Elektrode mit größerer Dicke bezogen auf das Gitter 16 in etwa symmetrisch verdickt sind. Je nach Anwendungsfall kann es auch vorteilhaft sein, die Erhöhung der Dicke in bestimmten Bereichen nur einseitig vorzusehen.

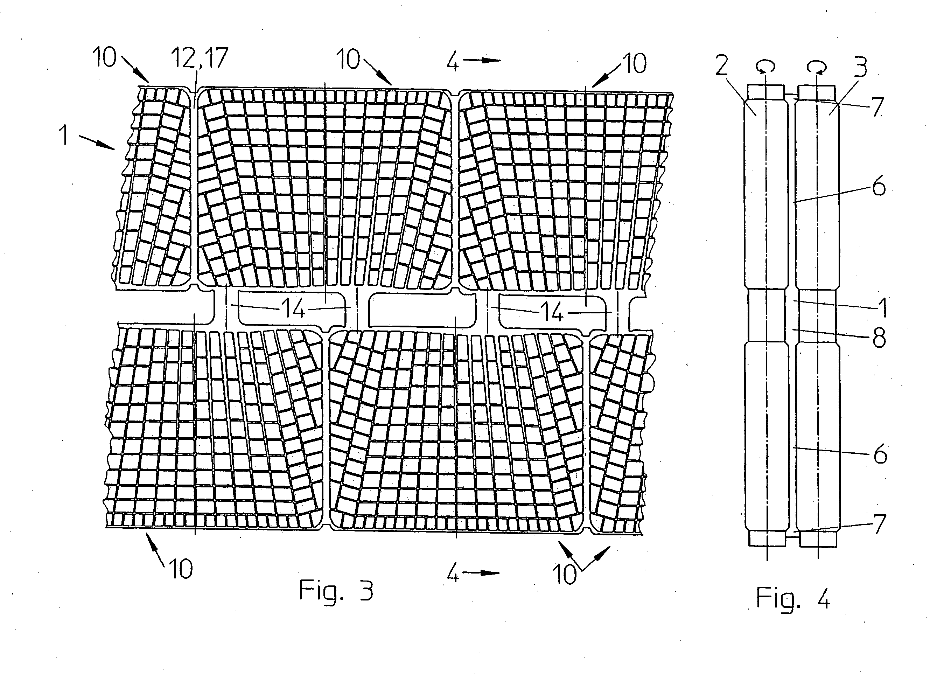

In der Figur 3 ist strangförmiges Elektrodenmaterial 1 dargestellt, das auf einer Maschine zur Herstellung erfindungsgemäßer Elektroden durch Vortriebsmittel in einer Richtung 4 fortbewegt wird. Die Vortriebsmittel können beispielsweise als Förderband ausgebildet sein. Das strangförmige Elektrodenmaterial 1 besteht vorteilhaft aus zuvor gewalzten und mit Ausstanzungen für die Gitterstruktur versehenem Blei. Das Elektrodenmaterial 1 ist gemäß Figur 3 soweit vorbereitet, dass einzelne Elektroden 10 in zwei Reihen miteinander zugewandten, mit den Kontaktfahnen 14 ausgestatteten Seiten aneinander angeordnet sind. Hierbei sind die jeweiligen linken und rechten Rahmenabschnitte 12, 17 zweier benachbarter Elektroden 10 miteinander verbunden. Die Kontaktfahnen 14 sind mit der jeweils gegenüberliegenden Elektrode 10, d. h. mit dessen Rahmenabschnitt 13, verbunden. Diese Verbindungen werden in einem nachfolgenden Herstellungsschritt aufgetrennt, so dass einzelne Elektroden 10 gemäß Figur 1 entstehen.

Das Elektrodenmaterial 1 wird auf der Maschine durch ein in der Figur 4 dargestelltes Walzenpaar 2, 3 geführt. In der Figur 4 ist das in Figur 3 in Draufsicht dargestellte Elektrodenmaterial in seitlicher Ansicht dargestellt. Die Walzen 2, 3 werden mit gegenläufigem Drehsinn betrieben, so dass das Elektrodenmaterial 1 durch sie hindurch gezogen wird. Zwischen den Walzen 2, 3 wird eine Walzöffnung 6, 7, 8 gebildet. Die Walzöffnung weist gemäß Figur 4 vorteilhaft ein Profil auf, bei dem an dem jeweiligen Ende der Walzen 2, 3 Bereiche 7 mit größerer Weite gebildet werden als in dazwischen liegenden Bereichen 6, 8. In einem mittleren Bereich der Walzen, zwischen den Bereichen 6, wird ein weiterer Bereich 8 mit größerer Weite als in den Bereichen 6 gebildet. Durch diese Art der Profilierung der Walzen 2, 3 werden vorteilhaft Elektroden mit dem in Figur 2 dargestellten Profil hergestellt.

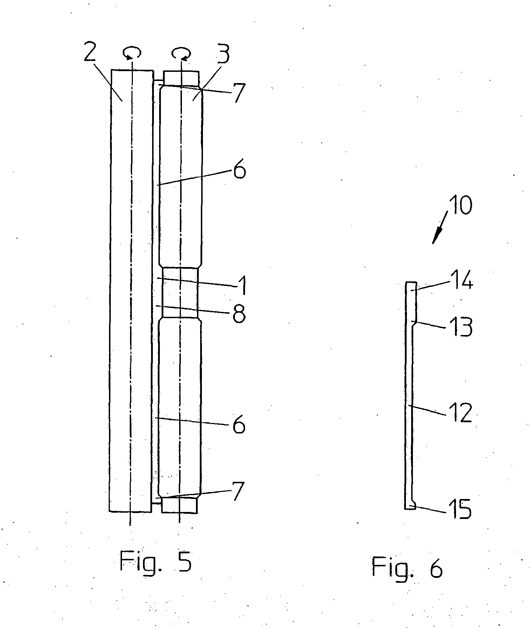

Eine weitere Ausführungsform der Walzen 2, 3 ist in der Figur 5 dargestellt. Dort weist die Walze 2 ein durchgehend glattes, ohne Vertiefungen ausgebildetes Oberflächenprofil in den Bereichen 6, 7, 8 auf, während die Walze 3 das bereits in der Figur 4 dargestellte Profil aufweist. Hierdurch können vorteilhaft Elektroden 10 mit lediglich einseitig ausgebildeten Bereichen größerer Dicke hergestellt werden, wie in der Figur 6 beispielhaft dargestellt.

Gemäß einem vorteilhaften Verfahren zur Herstellung einer Elektrode wird strangförmiges Elektrodenmaterial 1 durch eine Walzmaschine geführt. Die Walzen 2, 3 der Walzmaschine vorteilhaft mit einem bestimmten Profil versehen, z.B. wie anhand der Fig. 3 oder 5 erläutert. Das aus den Walzen austretende Elektrodenmaterial weist dann Elektroden auf, die zumindest in bestimmten Bereichen eine größere Dicke aufweisen als in dem Bereich des Gitters 16. Hiernach erfolgt eine Auftrennung des Elektrodenmaterials 1 in einzelne Elektroden 10.

## Patentansprüche

1. Gewalzte Elektrode für einen Akkumulator, wobei die Elektrode (10) im Wesentlichen plattenförmig ausgebildet ist und einen Rahmen (12, 13, 15, 17) mit einem darin angeordneten Gitter (16) aufweist, ferner am Rahmen (12, 13, 15, 17) eine Kontaktfahne (14) zur Verbindung der Elektrode (10) mit einem Batteriepol vorgesehen ist, wobei der Rahmen (12, 13, 15, 17) und/oder die Kontaktfahne (14) zumindest in bestimmten Bereichen (13,15) eine größere Dicke aufweist als das darin angeordnete Gitter (16), wobei die Elektrode durch Walzen mittels profilierter Walzen (2, 3) derart geformt ist, dass das aus den Walzen (2, 3) austretende Elektrodenmaterial Elektroden aufweist, die zumindest in bestimmten Bereichen eine größere Dicke aufweisen als in dem Bereich des Gitters (16), wobei der Rahmen (12, 13, 15, 17) aus einem oberen Rahmenabschnitt (13), einem unteren Rahmenabschnitt (15) sowie einem linken und einem rechten Rahmenabschnitt (12, 17) gebildet ist, wobei an den oberen Rahmenabschnitt (13) die Kontaktfahne (14) angeformt ist und wobei der linke und der rechte Rahmenabschnitt (12, 17) jeweils den oberen mit dem unteren Rahmenabschnitt (13, 15) verbinden, **dadurch gekennzeichnet, dass** von den Rahmenabschnitten nur der obere und der untere Rahmenabschnitt mit einer größeren Dicke als das Gitter (16) ausgebildet sind.

2. Gewalzte Elektrode nach Anspruch 1, **dadurch gekennzeichnet, dass** der Rahmen (12, 13, 15, 17) durch vier Abschnitte gebildet wird, von denen jeweils zwei Abschnitte paarweise im Wesentlichen parallel zueinander verlaufen und jeweils einander gegenüberliegende Begrenzungen des dazwischen angeordneten Gitters (16) bilden, wobei wenigstens einer der Abschnitte (13, 15) des Rahmens (12, 13, 15, 17) eine größere Dicke als das Gitter (16) aufweist.

3. Gewalzte Elektrode nach Anspruch 2, **dadurch gekennzeichnet, dass** wenigstens eines der Paare der sich gegenüberliegenden Abschnitte (13,15) des Rahmens (12, 13, 15, 17) eine größere Dicke als das Gitter (16) aufweist.

4. Gewalzte Elektrode nach einem der vorhergehenden Ansprüche, **dadurch gekennzeichnet, dass** die Kontaktfahne (14) an einen Abschnitt (13) des Rahmens (12, 13, 15, 17) angeformt ist, wobei die Kontaktfahne (14) eine größere Dicke aufweist als das Gitter (16).

5. Gewalzte Elektrode nach Anspruch 4, **dadurch gekennzeichnet, dass** der Abschnitt (13) des Rahmens (12, 13, 15, 17), an den die Kontaktfahne (14) angeformt ist, eine größere Dicke aufweist als das Gitter (16), insbesondere die gleiche Dicke wie die Kontaktfahne (14).

6. Gewalzte Elektrode nach wenigstens einem der vorhergehenden Ansprüche, **dadurch gekennzeichnet, dass** die Erhöhung der Dicke zumindest in bestimmten Bereichen der Elektrode (10) einseitig an der Elektrode (10) erfolgt.

7. Gewalzte Elektrode nach wenigstens einem der vorhergehenden Ansprüche, **dadurch gekennzeichnet, dass** die Erhöhung der Dicke wenigstens in bestimmten Bereichen der Elektrode (10) beidseitig an der Elektrode (10) erfolgt.

8. Verfahren zur Herstellung einer gewalzten Elektrode mit den Merkmalen des Anspruchs 1, bei der strangförmiges Elektrodenmaterial (1) aus zuvor gewalztem und mit Ausstanzungen für eine in einem Rahmen angeordnete Gitterstruktur versehenen Blei, durch eine Walzmaschine geführt wird, wobei die Walzen (2, 3) der Walzmaschine derart profiliert sind, dass das aus den Walzen (2, 3) austretende Elektrodenmaterial Elektroden aufweist, die zumindest in bestimmten Bereichen eine größere Dicke aufweisen als in dem Bereich des Gitters (16),
**dadurch gekennzeichnet, dass**
von den Rahmenabschnitten nur der obere und der untere Rahmenabschnitt mit einer größeren Dicke als das Gitter (16) ausgebildet sind.

## Claims

1. A rolled electrode for a storage battery, wherein the electrode (10) is substantially of plate-like form and has a frame (12, 13, 15, 17) comprising a grid (16) provided thereon and a contact lug (14) further provided on the frame (12, 13, 15, 17) for connecting the electrode (10) to a battery terminal, wherein the frame (12, 13, 15, 17) and/or the contact lug (14) has a greater thickness in at least certain areas than the provided grid (16), wherein the electrode is formed by rolling through profiled rollers (2, 3) such that the electrode material exiting the rollers (2, 3) comprises electrodes having a greater thickness in at least certain areas than in the area of the grid (16), wherein the frame (12, 13, 15, 17) is formed by an upper frame section (13), a lower frame section (15) as well as a left and a right frame section (12, 17), wherein the contact lug (14) is integrally formed on the upper frame section (13) and wherein the left and the right frame section (12, 17) respectively connect the upper and the lower frame section (13, 15), **characterized in that** only the upper and the lower frame section of said frame sections have a greater thickness than the grid (16).

2. The rolled electrode according to claim 1, **characterized in that** the frame (12, 13, 15, 17) is formed by four sections of which two respective sections run substantially parallel to one another as a pair and form opposing boundaries of the grid (16) disposed between them, wherein at least one of the sections (13, 15) of the frame (12, 13, 15, 17) has a greater thickness than the grid (16).

3. The rolled electrode according to claim 2, **characterized in that** at least one of the pair of opposing sections (13, 15) of the frame (12, 13, 15, 17) has a greater thickness than the grid (16).

4. The rolled electrode according to any one of the preceding claims, **characterized in that** the contact lug (14) is integrally formed on a section (13) of the frame (12, 13, 15, 17), wherein the contact lug (14) has a greater thickness than the grid (16).

5. The rolled electrode according to claim 4, **characterized in that** the section (13) of the frame (12, 13, 15, 17) on which the contact lug (14) is formed has a greater thickness than the grid (16), particularly the same thickness as the contact lug (14).

6. The rolled electrode according to at least one of the preceding claims, **characterized in that** the increased thickness of the electrode (10) occurs at least in certain areas on one side of the electrode (10).

7. The rolled electrode according to at least one of the preceding claims, **characterized in that** the increased thickness of the electrode (10) occurs at least in certain areas on both sides of the electrode (10).

8. A method for manufacturing a rolled electrode having the features of claim 1 in which strand-like electrode material (1) of previously rolled lead which has been provided with punchouts for a grid structure arranged in a frame is passed through a rolling machine, wherein the rollers (2, 3) of the rolling machine are profiled such that the electrode material exiting the rollers (2, 3) comprises electrodes which have a greater thickness in at least certain areas than in the area of the grid (16),
**characterized in that**
only the upper and the lower frame section of the frame sections have a greater thickness than the grid (16).

## Revendications

1. Électrode laminée pour un accumulateur, ladite électrode (10) étant réalisée sensiblement en forme de plaque et comprenant un cadre (12, 13, 15, 17) avec une grille (16) agencée dans celui-ci, et dans laquelle il est en outre prévu sur le cadre (12, 13, 15, 17) une patte de contact (14) pour la liaison de l'électrode (10) avec un pôle de batterie, dans laquelle le cadre (12, 13, 15, 17) et/ou la patte de contact (14) présente(nt), au moins dans certaines régions (13, 15), une épaisseur plus forte que la grille (16) agencée dans celui-ci, l'électrode étant mise en forme par laminage, au moyen de cylindres profilés (2, 3) de telle façon que le matériau d'électrode sortant des cylindres (2, 3) comprend des électrodes qui, au moins dans certaines régions, présentent une épaisseur plus forte que dans la région de la grille (16), dans laquelle le cadre (12, 13, 15, 17) est formé d'un tronçon de cadre supérieur (13) et d'un tronçon de cadre inférieur (15), ainsi que d'un tronçon de cadre à gauche et d'un tronçon de cadre à droite (12, 17), dans laquelle la patte de contact (14) est conformée sur le tronçon de cadre supérieur (13), et dans laquelle le tronçon de cadre à gauche et le tronçon de cadre à droite (12, 17) relient respectivement le tronçon de cadre supérieur avec le tronçon de cadre inférieur (13, 15),
**caractérisée en ce que**
parmi les tronçons de cadre, seuls le tronçon de cadre supérieur et le tronçon de cadre inférieur sont réalisés avec une épaisseur plus forte que la grille (16).

2. Électrode laminée selon l'une la revendication 1, **caractérisée en ce que** le cadre (12, 13, 15, 17) est formé par quatre tronçons parmi lesquels deux tronçons respectifs s'étendent en formant une paire sensiblement parallèlement l'un à l'autre et forment respectivement des délimitations mutuellement opposées de la grille (16) agencée entre eux, et l'un au moins des tronçons (13, 15) du cadre (12, 13, 15, 17) présente une épaisseur plus forte que la grille (16).

3. Électrode laminée selon la revendication 2, **caractérisée en ce que** l'une au moins des paires des tronçons opposés (13, 15) du cadre (12, 13, 15, 17) présente une épaisseur plus forte que la grille (16).

4. Électrode laminée selon l'une des revendications précédentes, **caractérisée en ce que** la patte de contact (14) est conformée sur un tronçon (13) du cadre (12, 13, 15, 17), et la patte de contact (14) présente une épaisseur plus forte que la grille (16).

5. Électrode laminée selon la revendication 4, **caractérisée en ce que** le tronçon (13) du cadre (12, 13, 15, 17) sur lequel est conformée la patte de contact (14) présente une épaisseur plus forte que la grille (16), et en particulier la même épaisseur que la patte de contact (14).

6. Électrode laminée selon l'une au moins des revendications précédentes, **caractérisée en ce que** l'augmentation de l'épaisseur a lieu, au moins dans certaines régions de l'électrode (10), d'un seul côté sur l'électrode (10).

7. Électrode laminée selon l'une au moins des revendications précédentes, **caractérisée en ce que** l'augmentation de l'épaisseur a lieu, au moins dans certaines régions de l'électrode (10), des deux côtés sur l'électrode (10).

8. Procédé pour la fabrication d'une électrode laminée avec les caractéristiques de la revendication 1, dans lequel un matériau d'électrode en forme de barreau continu (1), constitué de plomb préalablement laminé et doté de poinçonnages pour une structure en grille agencée dans un cadre, est passé à travers une machine de laminage, dans lequel les cylindres (2, 3) de la machine de laminage sont profilés de telle façon que le matériau d'électrode sortant des cylindres (2, 3) comprend des électrodes qui, au moins dans certaines zones, présentent une épaisseur plus forte que dans la zone de la grille (16),
**caractérisé en ce que**
parmi les tronçons de cadre, seuls le tronçon de cadre supérieur et le tronçon de cadre inférieur sont réalisés avec une épaisseur plus forte que la grille (16).
